# FASCICULE DE BREVET EUROPEEN

(11) **EP 0 642 065 B1**
(45) Date de publication et mention de la délivrance du brevet: **20.08.1997**
(21) Numéro de dépôt: 94113822.4
(22) Date de dépôt: 03.09.1994
(51) Int. Cl.: G04C 3/12, H01L 41/09

(54) **Détecteur de position du rotor d'un moteur piézo-électrique**
Rotorpositionsdetektor für piezoelektrischen Motor
Rotor position detector for piezo-electric motor

(30) Priorité: 08.09.1993 CH 2688/93
(43) Date de publication de la demande: 08.03.1995
(73) Titulaire: ASULAB S.A., CH-2501 Bienne (CH)
(72) Inventeur: Luthier, Roland, CH-1025 St-Sulpice (CH)
(74) Mandataire: Patry, Didier Marcel Pierre

(56) Documents cités:
- EP-A- 0 424 140
- EP-A- 0 580 049
- DE-A- 3 719 537
- DE-A- 4 131 948

## Description

La présente invention concerne un moteur piézo-électrique notamment à ondes stationnaires, qui est pourvu d'un stator vibrant conformé pour entraîner en rotation un rotor à lames (pattes de flexion) en appui sur le stator, et qui comprend un détecteur de position capable de fournir une information sur la position angulaire du rotor.

Plus particulièrement, l'invention concerne un moteur piézo-électrique du type susmentionné ayant des faibles dimensions et pouvant équiper une pièce d'horlogerie.

Les moteurs piézo-électriques classiques comportent, d'une part, un stator sur lequel sont montés des moyens piézo-électriques, tels qu'une céramique polarisée pourvue d'électrodes d'excitation pouvant être alimentées électriquement, et d'autre part, un rotor qui repose axialement sur le stator et qui est monté à rotation, par rapport à celui-ci, autour d'un axe d'entraînement lié mécaniquement à un mécanisme à entraîner.

Sous l'effet de l'excitation électrique reçue des électrodes, la céramique transmet un mouvement vibratoire au stator qui provoque le déplacement en rotation du rotor disposé en appui élastique sur celui-ci.

Dans ce type de moteur asynchrone, la position angulaire du rotor est, après rotation, intrinsèquement inconnue, ce qui est un inconvénient majeur quand le rotor doit entraîner les aiguilles ou le quantième d'une pièce d'horlogerie.

Dans la demande JP-A-60 113 675, il est décrit un moteur piézo-électrique pour une pièce d'horlogerie, comprenant un détecteur de position angulaire du rotor. Le moteur comprend de façon classique un stator sur lequel sont montés des éléments piézo-électriques pourvus d'électrodes d'excitation, et un rotor qui est monté à rotation sur ce stator et qui est pourvu d'un ou de plusieurs trous. Au-dessus des trous ménagés dans le rotor est montée une diode électroluminescente qui est assujettie à un substrat séparé, monté fixement sur le moteur. Un photo-transistor est placé sur un support disposé au-dessous du rotor, au droit de la diode électroluminescente. Lors du passage de la lumière émise par la diode électroluminescente au travers des trous du rotor, le photo-transistor reçoit cette lumière émise et on peut dès lors détecter la position angulaire du rotor.

L'encombrement du moteur muni de ce détecteur de position est important. En outre, ce moteur comprend un grand nombre de pièces qui augmentent son prix et diminuent sa fiabilité.

Une autre solution pour détecter la position du rotor est connue du document JP-A-60 51 478 qui propose des moyens de détection de la position du rotor comportant un système à contact électrique formé par un balai fixe, frottant sur un disque mobile gravé de 60 pistes conductrices (collecteur). Ce disque de détection, sous tension, est fixé au rotor. Cet agencement présente aussi l'inconvénient d'avoir un grand nombre de composants. De plus, l'assemblage de ce moteur est relativement compliqué, car le disque de détection doit être centré sur le rotor et mis sous tension, et ce pour chaque moteur. Aussi, le contact entre le balai et les pistes engendre un frottement qui s'oppose au mouvement rotatif du rotor si bien que le balai risque de s'user rapidement. De plus, l'usure de la surface de contact est difficile à maîtriser et la présence de particules d'usure peut empêcher le fonctionnement normal du moteur.

Le but de la présente invention est de remédier à ces inconvénients en fournissant un moteur piézo-électrique comprenant un détecteur de position ayant de très faibles dimensions et de fabrication simple et peu coûteuse.

A cet effet, l'invention a pour objet un moteur piézo-électrique du type comprenant :
- un stator comportant des moyens piézo-électriques d'excitation susceptibles de provoquer un mouvement vibratoire du stator,
- un rotor monté à rotation par rapport au stator, ledit rotor comportant un corps sur lequel sont disposées des pattes de flexion formant des moyens de transmission conformés pour transmettre le mouvement vibratoire du stator audit rotor et pour entraîner ce rotor en rotation, ces pattes de flexion parcourant un chemin de déplacement relatif au stator, et
- un détecteur (D) de position angulaire du rotor caractérisé en ce que ledit détecteur est disposé au proche ou au droit du chemin de déplacement, et en ce que ledit détecteur est formé par un ou plusieurs capteurs piézo-électriques permettant de repérer le passage desdites pattes.

On comprend donc que par l'utilisation de l'effet piézo-électrique inverse, on détecte la position angulaire du rotor, et ce grâce à la disposition d'un ou de plusieurs capteurs de position piézo-électriques.

L'invention concerne en outre un procédé de fabrication d'un stator convenant particulièrement pour un tel moteur piézo-électrique, et dans lequel
a) on fournit un disque de matière à usiner,
b) on dépose plusieurs couches de matériau piézo-électrique et électriquement conductrices sur ce disque par des jeux de masques appropriés,
c) on forme sur le disque une zone piézo-électrique d'excitation, et on forme, simultanément à la zone piézo-électrique piézo-électrique d'excitation, au moins une zone de détection destinée à former un détecteur de position angulaire du rotor.

D'autres caractéristiques et avantages de l'invention apparaîtront à la lecture de la description détaillée qui suit, faite en référence aux dessins annexés qui sont donnés uniquement à titre d'exemple et dans lesquels :
- la figure 1 est une vue en coupe schématique du moteur selon l'invention,
- la figure 2 est une vue éclatée dudit moteur, sur laquelle les couches piézo-électriques actives ménagés sous le stator ont été mises en évidence,
- la figure 2a représente schématiquement un mode de vibration du stator de la figure 2,
- la figure 3 est une vue de dessus d'un disque souple formant le rotor du moteur représenté aux figures 1 et 2,
- la figure 4 représente schématiquement le signal de perturbation du mode de vibration représentatif de la position des pattes du rotor du moteur selon l'invention,
- la figure 5 est une vue faite selon la flèche IV de la figure 2, et représente en vue de dessous un stator selon un premier mode de réalisation du moteur selon l'invention,
- la figure 6 est une vue similaire à la figure 5, mais représentant un stator selon un deuxième mode de réalisation du moteur selon l'invention,
- les figures 7A à 7F sont des vues schématiques représentant le procédé de fabrication d'un stator selon le premier mode de réalisation vu à la figure 5, et
- les figures 8A à 8F sont des vues schématiques représentant un procédé de fabrication d'un stator selon le deuxième mode de réalisation vu à la figure 6.

En se référant aux figures annexées, on décrira ci-après d'une manière générale un moteur piézo-électrique conforme à l'invention, repéré par la référence générale M.

Le moteur M comporte un stator 1 dont la partie vibrante V est réalisée, par exemple, dans une plaquette de silicium micro-usinée.

Le moteur M comporte en outre un rotor 4 qui est monté à rotation par rapport au stator 1, autour d'un axe géométrique de rotation X.

Le stator 1 comporte une cavité ou "baignoire" 6 ménagée dans l'épaisseur du stator 1 et destinée à former un logement à l'intérieur duquel est disposé le rotor 4. La cavité 6 qui présente une forme circulaire est creusée directement dans le corps du stator 1 par une technique de micro-usinage de volume, réalisée plus particulièrement par une attaque chimique du silicium sur une période de temps donnée. Cette technique d'usinage du silicium étant classique, elle ne sera pas décrite ici de façon plus détaillée.

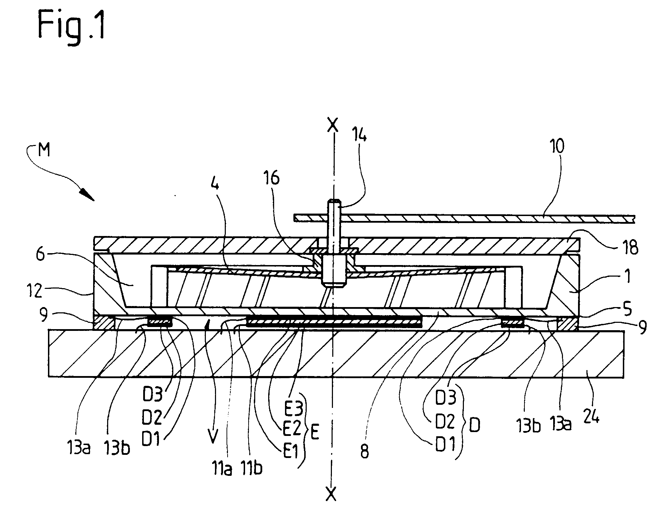

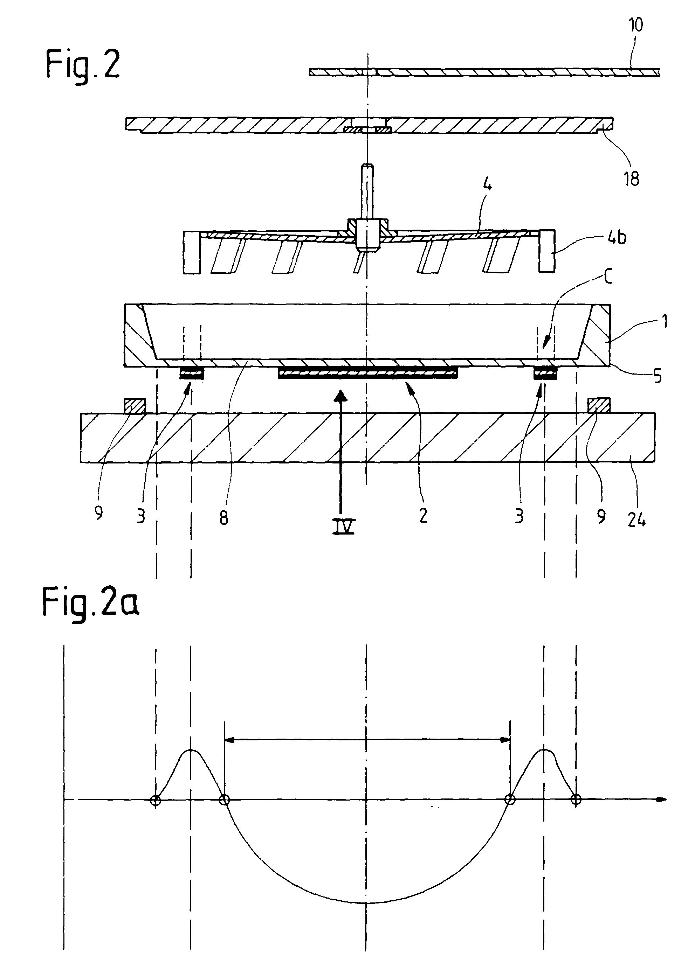

Comme on le voit plus particulièrement aux figures 1 et 2, le rotor 4 repose axialement dans le fond de la cavité 6, fond qui a une forme de membrane 8 contre laquelle sont assujettis extérieurement des moyens piézo-électriques d'excitation E et qui forme la partie vibrante V du stator 1.

La membrane 8 présente une épaisseur très faible, entre 0,01 mm et 0,02 mm.

Les moyens piézo-électriques d'excitation E qui sont conformés pour provoquer un mouvement vibratoire du stator 1, et plus particulièrement de la membrane 8, sont réalisés par dépôt de couches minces comportant deux couches électriquement conductrices, notamment métalliques, E₁ et E₃ réalisées en aluminium et formant électrodes, et une couche E₂ d'un matériau piézo-électrique, qui est interposée entre les deux autres couches; ces couches étant gravées par une technique d'usinage, dite d'usinage de surface. Le fonctionnement des moyens piézo-électriques E est classique, et il ne sera pas décrit ici de façon plus détaillée.

On remarquera sur la figure 2 que les moyens piézo-électriques E sont disposés contre la membrane 8, à l'extérieur de celle-ci et que, grâce à la structure en couches minces, ces moyens ne forment qu'une très faible surépaisseur sur la membrane 8, de l'ordre de 0,005 mm.

Le stator 1 comporte ici de plus un pourtour périphérique qui a une forme de couronne de renforcement, référencée 12, constituant l'ossature mécanique du stator 1 autour de la membrane 8.

La cavité 6, quant à elle, se présente avantageusement sous la forme d'une cuvette tronconique qui s'évase et qui est ouverte vers l'extérieur, notamment vers le haut, dans la position du moteur représentée à la figure 1.

Comme on le remarque sur cette figure, le rotor 4 est intégralement contenu dans le stator 1, dans son épaisseur, et plus particulièrement dans le logement 6, si bien que l'ensemble stator 1 - rotor 4 ne forme aucune surépaisseur sur le moteur et constitue une unité intégrée et imbriquée.

Plus particulièrement, la membrane 8 et le pourtour 12 du stator en forme de couronne viennent de matière, puisqu'ils sont réalisés ensemble à partir d'une même plaquette et obtenus par attaque chimique.

Le rotor 4 est monté à rotation par rapport au stator 1 par l'intermédiaire d'un axe d'entraînement 14 sur lequel est chassé, dans cet exemple de réalisation, une aiguille de minute référencée 10.

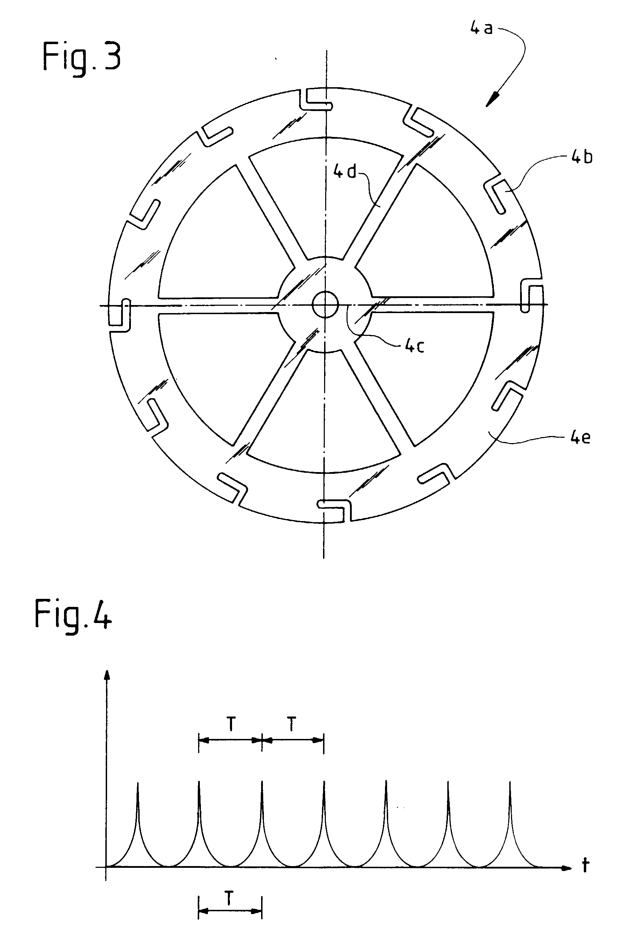

Le rotor 4 comporte un corps qui est dans cet exemple réalisé sous la forme d'un disque souple ajouré 4a (figure 3) comportant des pattes ou lames de flexion inclinées 4b aboutant directement par un contact de frottement sur la membrane 8 du stator 1. Ces pattes 4b transmettent au rotor 4 le mouvement vibratoire du stator et entraînent ledit rotor en rotation. Ces pattes sont réalisées en une matière élastique.

A cet effet, le rotor 4, et plus particulièrement le disque 4a, comporte un moyeu central 4c à partir duquel s'étendent plusieurs bras d'élasticité radiaux 4d solidaires d'une bague annulaire 4e dans laquelle sont ménagées directement les pattes 4b. Une bague de fixation 16 (figure 1) est assujettie au moyeu central 4c. L'axe 14 est monté à rotation dans un couvercle 18, par l'intermédiaire des moyens de guidage classiques.

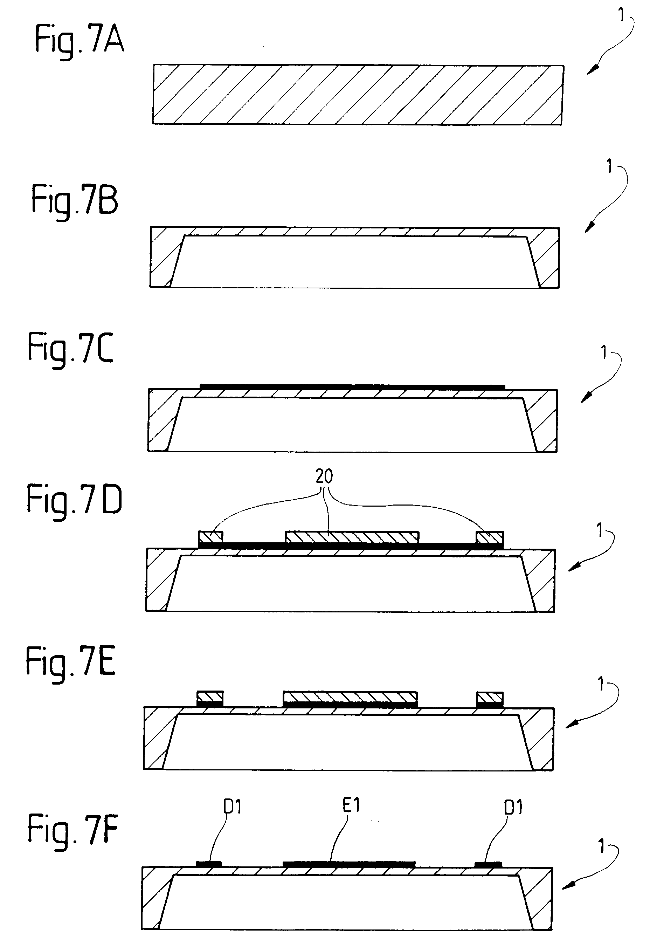

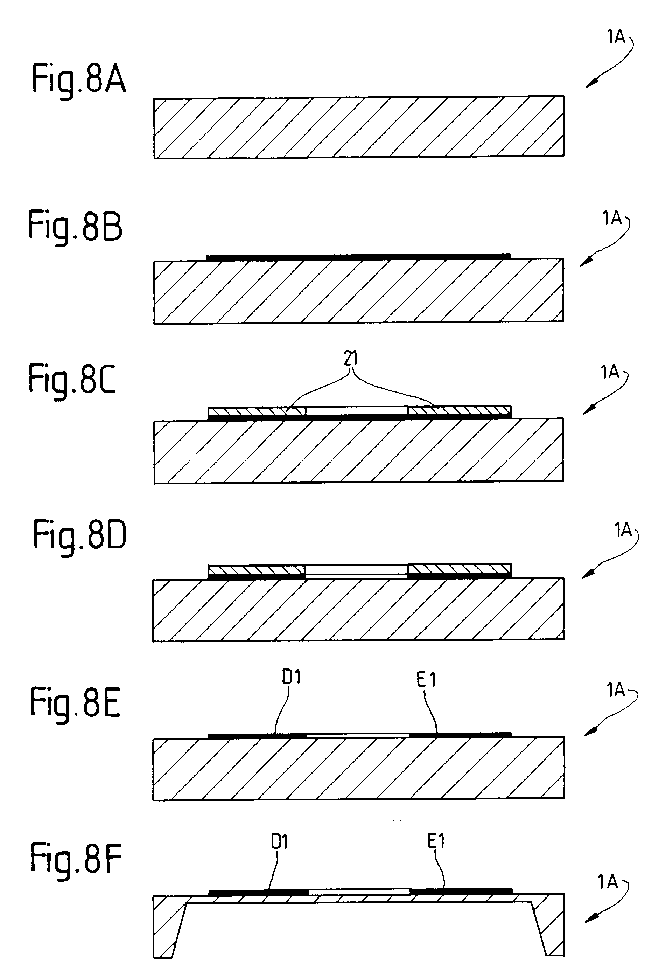

Comme mentionné ci-avant, les moyens piézo-électriques d'excitation E sont déposés et structurés sous forme de couches minces, sous la membrane 8, du côté opposé à la cuvette 6, par des jeux de masques appropriés (figures 7A-7F et 8A-8F).

Par ailleurs, le stator 1 est relié et assujetti fixement à une plaque de circuit imprimé 24 par plusieurs espaceurs électriquement conducteurs 9, par exemple des plots connus sous l'appellation anglaise "bumps", obtenus par dépôt d'un matériau conducteur d'une dizaine de micromètres sur la plaque de circuit, ces espaceurs ayant une fonction de support mécanique pour le stator. La plaque de circuit imprimé 24 comporte des pistes de connexion électriques (non représentées) réalisées classiquement par un dépôt de cuivre. Ces pistes sont conformées sur la plaque de circuit imprimé pour venir en partie en coïncidence respectivement avec des pistes ou fils de connexion du stator, référencés 11a, 11b alimentant les électrodes E₁ et E₃ des moyens piézo-électriques d'excitation E.

Les pistes électriquement conductrices ménagées sur le stator sont réalisées en aluminium et déposées sous formes de couches minces sous la membrane 8, lors du dépôt des électrodes E₁, E₂ et E₃, par des jeux de masques appropriés, non représentés.

Le stator 1 du moteur piézo-électrique selon l'invention est pourvu, en plus des moyens piézo-électriques d'excitation E, d'un ou de plusieurs capteurs piézo-électriques D, dits de détection, conformés pour détecter la position angulaire du rotor 4.

La figure 2a représente schématiquement un mode de vibration du stator 1 du moteur M selon l'invention. On s'arrange pour que les maxima du mode de vibration du stator 1, qui correspondent à la position du ou des capteurs de détection D, se trouvent au proche ou au droit du passage des pattes de flexion 4b du rotor 4.

Ainsi, les pattes 4b vont agir sur le membrane 8 et vont alors légèrement perturber ce mode de vibration. Cette perturbation peut être détectée afin d'obtenir un signal électrique représentatif de la position des pattes 4b, comme cela sera expliqué plus en détail ci-après.

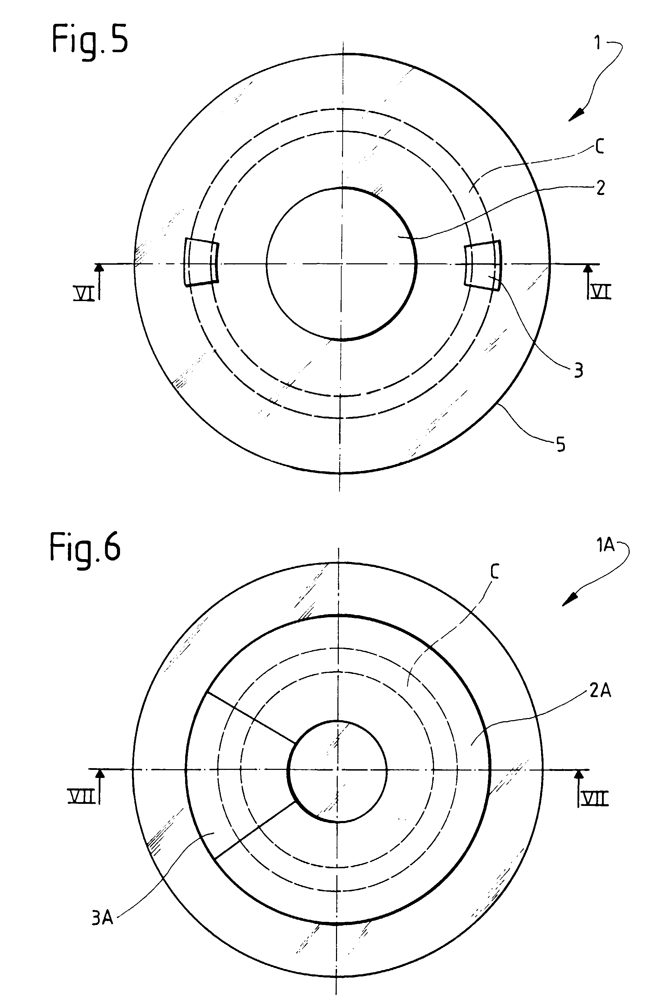

En se référant plus particulièrement aux figures 2 et 5, on décrira ci-après un premier mode de réalisation du détecteur de position du moteur selon l'invention.

Comme on le voit sur ces figures, contre le stator 1 sont assujettis extérieurement les moyens piézo-électriques d'excitation E, mais aussi le ou les capteurs de détection D qui sont aussi ménagés par un procédé d'usinage classique faisant appel aux techniques de déposition en phase vapeur (PVD) Ces moyens piézo-électriques de détection D consistent également en une couche piézo-électrique D2 interposée entre deux couches électriquement conductrices D1, D3 par exemple métalliques formant les électrodes. Ces électrodes sont reliées par des pistes ou fils de connexion 13a, 13b à la plaque 24 pour les alimenter (figure 1). Les moyens piézo-électriques d'excitation E définissent une zone d'excitation 2 de forme circulaire positionnée au centre de la plaquette formant le stator 1. Par la technique de fabrication planaire, on peut donc fabriquer simultanément à la zone d'excitation 2 une ou plusieurs zones de détection 3 (deux zones de détection étant ici représentées), matérialisées par le ou les capteurs D, formés dans le même matériau piézo-électrique. Sur la figure 5, on voit que la ou les zones de détection 3 sont positionnées radialement entre la zone d'excitation 2 et le bord radial 5 du stator 1. Chaque zone de détection 3 est positionnée de préférence juste sous le passage des pattes 4b du rotor 4.

Cet agencement constitue donc un cercle central formé d'une couche active piézo-électrique, à savoir la zone d'excitation 2, entourée par une zone libre non-active, et autour de celle-ci, une ou plusieurs couches actives piézo-électriques, à savoir les zones de détection 3.

Le rotor 4 et plus particulièrement ses pattes 4b, entraînés à rotation par le stator, décrivent sur la membrane 8 un chemin de déplacement circulaire C qui est concentrique à la zone d'excitation 2. Dans l'exemple représenté, chaque zone de détection 3 est disposée au droit du chemin de déplacement C. Les pattes 4b du rotor 4 vont solliciter à leur passage chaque zone de détection 3 via la membrane 8 et, par l'effet piézo-électrique inverse, cette zone va transmettre, par l'intermédiaire des pistes de connexion non représentées, des signaux électriques représentatifs de la position angulaire du rotor 4.

La figure 4 montre ce signal électrique qui est utilisé pour déterminer la position des pattes 4b. Chaque maximum ou impulsion indique la perturbation du mode de vibration du stator 1 lors du passage d'une patte 4b sur la zone de détection 3, ces maxima ou impulsions peuvent être comptés par un dispositif électronique numérique de configuration classique, non représenté, pour, en fonction du nombre de pattes 4b du rotor, connaître la position angulaire de celui-ci par rapport au stator 1. La périodicité du signal qui dépend donc de la vitesse de rotation du rotor et du nombre de pattes et la distance entre celles-ci, est référencée par T.

Chaque zone de détection 3 qui forme un détecteur D, peut mesurer localement les déformations de la membrane 8 et les perturbations des modes de vibration induites par la force exercée individuellement par chaque patte 4b du rotor, lors de son passage sur l'un des détecteurs D ou au voisinage de celui-ci.

En se référant à la figure 6, on décrira ci-après un deuxième mode de réalisation du moteur piézo-électrique selon l'invention.

Ici, le stator 1A consiste également en une plaquette par exemple de silicium ayant une forme de membrane, et qui est fabriqué comme le stator du premier mode de réalisation.

Toutefois, la zone d'excitation 2A n'est plus centrale, mais est positionnée de préférence sous le passage des pattes 4b du rotor 4. La forme de la zone d'excitation 2A est partiellement annulaire. En effet, cette zone n'est pas constituée par un anneau complet, un secteur de celui-ci formant la zone de détection 3A. Ainsi, la zone de détection est intégrée dans l'anneau de la zone d'excitation et forme avec cette zone un anneau complet. Le fonctionnement de ce détecteur est identique à celui du détecteur décrit ci-avant. On a donc un anneau d'une couche piézo-électrique dont une partie qui en est la partie principale agit comme zone d'excitation 2A, tandis que l'autre partie, plus petite, qui est un secteur de l'anneau piézo-électrique, agit comme une zone de détection 3A. On précisera que les deux zones 2A et 3A sont isolées électriquement.

Sur les figures 7A à 7F, on voit schématiquement les étapes du procédé de fabrication du stator selon le premier mode de réalisation. En premier lieu (figure 7A), on fournit un disque par exemple en silicium, qui sera utilisé comme stator. On peut d'abord traiter ce disque en obtenant un stator, comme on le voit sur la figure 7B, mais on pourrait également former le stator après avoir déposé les couches piézo-électriques (voir figure 8F). Ensuite, on dépose une couche conductrice E₁, D₁ (figure 7C) qui est structurée par une méthode photolithographique et par usinage chimique, par exemple, par un jeu de masques approprié. On usine donc le disque par micro-usinage de surface en l'attaquant chimiquement (figure 7E). D'abord la partie de la couche non protégée par le masque 20 est attaquée, et le masque est enlevé (figure 7F). Ensuite on dépose la couche piézo-électrique E₂, D₂ (non représentée) qui est traitée d'une même façon, suivi par la deuxième couche conductrice E₃, D₃ également formée par une structuration photolithographique et usinage chimique. Grâce à un jeu de masques approprié, on obtient ainsi non seulement la zone d'excitation 2, mais également au même temps la ou les zones de détection 3. On comprend donc que chaque détecteur D qui est de même structure que les moyens d'excitation E comporte une épaisseur qui est du même ordre que celle desdits moyens d'excitation E, à savoir d'environ 0,005 mm.

Les figures 8A à 8E montrent les étapes similaires du procédé de fabrication du stator 1A selon le deuxième mode de réalisation, où est utilisé un masque 21 approprié pour obtenir la zone d'excitation 2A et la zone de détection 3A intégrées dans le même anneau en matériau piézo-électrique. Ici, on a d'abord déposer les couches et masques appropriés sur le disque et ensuite formée la membrane par usinage chimique (figure 8F).

Ainsi, on comprend de ce qui vient d'être décrit qu'il est possible d'intégrer directement dans le procédé de fabrication de la zone d'excitation, la fabrication d'une ou plusieurs zones de détection, formant au moins un détecteur, qui peut détecter la position angulaire du rotor et qui donc remplace avantageusement un encodeur externe. Enfin, on obtient un ensemble très compact, de fabrication simple, la fabrication du moteur piézo-électrique muni du détecteur étant obtenue avec une simple modification du jeu de masques utilisé pour la zone d'excitation. On réalise ainsi des économies importantes en réduisant le nombre de pièces, tout en simplifiant la construction et le montage du moteur piézo-électrique muni du détecteur de position angulaire du rotor qui vient d'être décrit.

## Revendications

1. Moteur piézo-électrique du type comprenant :
- un stator (1) comportant des moyens piézo-électriques d'excitation (E) susceptibles de provoquer un mouvement vibratoire du stator (1),
- un rotor (4) monté à rotation par rapport au stator (1), ledit rotor (4) comportant un corps sur lequel sont disposées des pattes de flexion (4b) formant des moyens de transmission conformés pour transmettre le mouvement vibratoire du stator (1) audit rotor (4) et pour entraîner ce rotor en rotation, ces pattes de flexion (4b) parcourant un chemin de déplacement (C), relatif au stator (1), et
- un détecteur (D) de position angulaire du rotor caractérisé en ce que ledit détecteur (D) est disposé au proche ou au droit du chemin de déplacement (C), et en ce que ledit détecteur est formé par un ou plusieurs capteurs piézo-électriques permettant de repérer le passage desdites pattes (4b).

2. Moteur selon la revendication 1, caractérisé en ce que ledit détecteur (D) est solidaire du stator (1).

3. Moteur selon la revendication 1, caractérisé en ce que ledit détecteur (D) est intégré au stator (1).

4. Moteur selon l'une quelconque des revendications précédentes, caractérisé en ce que ledit stator (1) est en un matériau élastique tel que du silicium, et a un forme de membrane (8) contre laquelle sont assujetties extérieurement des couches actives piézo-électriques constituant à la fois lesdits moyens piézo-électriques d'excitation (E) et ledit détecteur (D).

5. Moteur selon la revendication 4, caractérisé en ce que lesdits moyens piézo-électriques d'excitation (E) sont d'une forme circulaire et sont positionnés au centre du stator, et en ce que ledit détecteur (D) est positionné radialement, entre les moyens piézo-électrique d'excitation (E) et un bord radial (5) du stator (1).

6. Moteur selon la revendication 4, caractérisé en ce que ledit détecteur (D) et lesdits moyens piézo-électriques d'excitation (E) forment ensemble un anneau positionné au voisinage ou au droit du chemin de déplacement des pattes (4b) du rotor (4), un ou plusieurs secteurs de l'anneau constituant ledit détecteur (D) et la partie restante constituant lesdits moyens d'excitation (E).

7. Procédé de fabrication d'un stator destiné à équiper un moteur piézo-électrique selon l'une des revendications précédentes, dans lequel
- a) on fournit un disque de matière à usiner par exemple en silicium;
- b) on dépose plusieurs couches de matériau piézo-électriques et électriquement conductrices sur ce disque par des jeux de masques (20,21) appropriés; et
- c) on usine lesdites couches pour obtenir une zone piézo-électriques d'excitation (2,2A), ce procédé étant caractérisé par le fait que dans l'étape c) on forme, simultanément à la zone piézo-électrique d'excitation (2,2A), au moins une zone piézo-électrique de détection (3,3A) destinée à former un détecteur de position angulaire du rotor.

8. Procédé de fabrication d'un stator selon la revendication 7, caractérisé en ce que l'usinage des couches dans l'étape c) est fait par micro-usinage de surface desdites couches.

9. Procédé de fabrication d'un stator selon la revendication 7 ou 8 pour la mise en oeuvre du moteur selon la revendication 5, caractérisé en ce que
- la zone piézo-électrique d'excitation (2) est déposée centralement et présente une forme circulaire sur le disque, et en ce que
- la zone piézo-électrique de détection (3) est ménagée radialement entre la zone d'excitation (2) et un bord radial (5) du stator (1).

10. Procédé de fabrication d'un stator selon la revendication 7 ou 8 pour la mise en oeuvre du moteur selon la revendication 6, caractérisé en ce que
- la zone piézo-électrique d'excitation (2A) et la zone piézo-électrique de détection (3A) sont ménagées pour former ensemble une couche active piézo-électrique en forme d'anneau, la zone piézo-électrique de détection (3A) constituant un ou plusieurs secteurs de cet anneau tandis que la zone d'excitation (2A) constitue la partie restante dudit anneau.

## Patentansprüche

1. Piezoelektrischer Motor der Bauart, welche umfaßt:
- einen Stator (1) mit piezoelektrischen Erregungsmitteln (E), mittels denen eine Vibrationsbewegung des Stators (1) bewirkbar ist,
- einen Rotor (4), der drehbeweglich relativ zum Stator (1) montiert ist, welcher Rotor (4) einen Korpus umfaßt, auf dem Flexionsfüße (4b) angeordnet sind, welche Übertragungsmittel bilden, ausgebildet zum Übertragen der Vibrationsbewegung des Stators (1) auf dem Rotor (4) und zum Antreiben dieses Rotors zur Drehung, welche Flexionsfüße (4b) einen Verlagerungspfad (C) relativ zum Stator (1) durchlaufen, und
- einen Detektor (D) für die Winkelposition des Rotors,
dadurch gekennzeichnet, daß der Detektor (D) nahe oder gegenüber dem Verlagerungspfad (C) angeordnet ist und daß der Detektor von einem oder mehreren piezoelektrischen Sensoren gebildet ist, die den Durchgang der Füße (4b) zu verfolgen ermöglichen.

2. Motor nach Anspruch 1, dadurch gekennzeichnet, daß der Detektor (D) mit dem Stator (1) verbunden ist.

3. Motor nach Anspruch 1, dadurch gekennzeichnet, daß der Detektor (D) in den Stator (1) integriert ist.

4. Motor nach einem der vorangehenden Ansprüche, dadurch gekennzeichnet, daß der Stator (1) aus einem elastischen Material, wie Silicium, besteht und eine Membranform (8) aufweist, gegen die außen aktive piezoelektrische Schichten anliegen, welche gleichzeitig die piezoelektrischen Erregungsmittel (E) und den Detektor (D) bilden.

5. Motor nach Anspruch 4, dadurch gekennzeichnet, daß die piezoelektrischen Erregungsmittel (E) von runder Form sind und im Zentrum des Stators angeordnet sind und daß der Detektor (D) radial zwischen den piezoelektrischen Erregungsmitteln (E) und einem radialen Rand (5) des Stators (1) positioniert ist.

6. Motor nach Anspruch 4, dadurch gekennzeichnet, daß der Detektor (D) und die piezoelektrischen Erregungsmittel (E) gemeinsam einen Ring bilden, der nahe oder gegenüber dem Verlagerungspfad der Füße (4b) des Rotors (4) positioniert ist, wobei einer oder mehrere Sektoren des Ringes den Detektor bilden und die restliche Partie die Erregungsmittel (E) bilden.

7. Verfahren zum Herstellen eines Stators, bestimmt zum Bestücken eines piezoelektrischen Motors nach einem der vorangehenden Ansprüche, bei dem
- a) man eine Scheibe aus einem zu bearbeitenden Material, beispielsweise aus Silicium, bereitstellt,
- b) man mehrere Schichten aus piezoelektrischem und elektrisch leitendem Material auf diese Scheibe durch einen Satz von entsprechenden Masken (20, 21) aufbringt,
- c) man die Schichten bearbeitet, um eine piezoelektrische Erregungszone (2, 2A) zu erhalten, welches Verfahren dadurch gekennzeichnet ist, daß man im Schritt (c) gleichzeitig mit der piezoelektrischen Erregungszone (2, 2A) mindestens eine piezoelektrische Detektorzone (3, 3A) ausbildet, die dazu bestimmt ist, einen Detektor für die Winkelposition des Rotors zu bilden.

8. Verfahren für die Herstellung eines Stators nach Anspruch 7, dadurch gekennzeichnet, daß die Bearbeitung der Schichten im Schritt c) durch Mikrobearbeitung der Oberfläche der Schichten erfolgt.

9. Verfahren nach Anspruch 7 oder 8 für die Realisierung des Motors nach Anspruch 5, dadurch gekennzeichnet, daß die piezoelektrische Erregungszone (2) zentral angeordnet wird und eine runde Form auf der Scheibe aufweist und daß die piezoelektrische Detektorzone (3) radial zwischen der Erregerzone (2) und einem radialen Rand (5) des Stators (1) hergestellt wird.

10. Verfahren nach Anspruch 7 oder 8 für die Realisierung des Motors nach Anspruch 6, dadurch gekennzeichnet, daß
- die piezoelektrische Erregerzone (2A) und die piezoelektrische Detektorzone (3A) zur gemeinsamen Bildung einer aktiven piezoelektrischen Schicht in Ringform hergestellt werden, wobei die piezoelektrische Detektorzone (3A) einen oder mehrere Sektoren dieses Ringes bildet, während die Erregerzone (2A) den verbleibenden Teil des Ringes bildet.

## Claims

1. Piezo-electric motor of the type comprising :
- a stator (1) including piezo-electric excitation means (E) capable of inducing a vibratory motion in the stator (1),
- a rotor (4) mounted for rotation relative to the stator, said rotor (4) including a body on which are assembled flexion tabs (4b) forming transmission means arranged to transmit the vibratory motion of the stator (1) to said rotor (4) and to rotationally drive such rotor, said flexion tabs (4b) following a displacement path (C) relative to said stator (1), and
- an angular position detector of the rotor,
characterized in that said detector (D) is arranged near and in line with said displacement path (C), and in that said detector is formed by one or several piezo-electric sensors allowing to track the passage of said tabs (4b).

2. Motor according to claim 1, characterized in that said detector (D) is fixedly attached to the stator (1).

3. Motor according to claim 1, characterized in that said detector (D) is integrated in the stator (1).

4. Motor according to any one of the preceding claims, characterized in that said stator (1) is of an elastic material such as silicon and is in the form of a membrane (8) against which are fastened externally piezo-electric active layers constituting said piezo-electric excitation means (E) and said detector (D).

5. Motor according to claim 4, characterized in that said piezo-electric excitation means (E) are of a circular form and are arranged at the centre of the stator, and in that said detector (D) is arranged radially between said excitation means (E) and a radial edge (5) of the stator (1).

6. Motor according to claim 4, characterized in that said detector (D) and said piezo-electric excitation means (E) together form a ring which is positioned near and in line with the displacement path of said tabs (4b) of the rotor (4), one or several sections of the ring constituting said detector (D) and the rest of the ring constituting said excitation means (E).

7. Process of manufacturing a stator to be used in a piezo-electric motor according to any one of the preceding claims, in which
a) a disc of a machinable material such as for example silicon is provided;
b) several piezo-electric and electrically conducting layers are deposited on this disc by sets of appropriate masks (20,21); and
c) said layers are machined so as to obtain a piezo-electric excitation zone (2,2A),
said process being characterized by the fact that during step c) at least one piezo-electric detection zone (3,3A) is formed simultaneously to the piezo-electric excitation zone (2,2A), to form an angular position detector of the rotor.

8. Process of manufacturing a stator according to claim 7, characterized in that the machining of the layers during step c) is performed by micro-machining the surface of said layers.

9. Process of manufacturing a stator according to claim 7 or 8 for implementation in the motor according to claim 5, characterized in that
- the piezo-electric excitation zone (2) is arranged centrally and in a circular form on the disc, and in that
- the piezo-electric detection zone (3) is arranged radially between the excitation zone (2) and the radial edge (5) of the stator (1).

10. Process of manufacturing a stator according to claim 7 or 8 for implementation in the motor according to claim 6, characterized in that
- the piezo-electric excitation zone (2A) and the piezo-electric detection zone (3A) are arranged so as to form together an active piezo-electric layer being in the form of a ring, the piezo-electric detection zone (3A) constituting one or several sections of this ring whereas the excitation zone (2A) constitutes the remaining part of said ring.
